(19) **Europäisches Patentamt**
**European Patent Office**
**Office européen des brevets**

(11) **EP 4 109 261 A2**

(12) **EUROPEAN PATENT APPLICATION**

(43) Date of publication:
**28.12.2022 Bulletin 2022/52**

(21) Application number: **22189870.3**

(22) Date of filing: **11.08.2022**

(51) International Patent Classification (IPC):
**G06F 9/50** (2006.01)

(52) Cooperative Patent Classification (CPC):
**G06F 9/5011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.09.2021 CN 202111132004**

(71) Applicant: **Beijing Baidu Netcom Science Technology Co., Ltd.**
**Beijing 100085 (CN)**

(72) Inventors:
• **LIU, Chang**
**Beijing, 100085 (CN)**
• **WAN, Guangdi**
**Beijing, 100085 (CN)**
• **LIU, Wei**
**Beijing, 100085 (CN)**

(74) Representative: **J A Kemp LLP**
**80 Turnmill Street**
**London EC1M 5QU (GB)**

(54) **ACCESS PROCESSING METHOD, DEVICE, STORAGE MEDIUM AND PROGRAM PRODUCT**

(57) The present disclosure provides an access processing method, a device, a storage medium and a program product, relates to the field of data processing, and in particular, to the fields of smart search, information flow, big data, distributed system, cloud computing and the like. A specific implementation solution is: by creating a plurality of container components on a service platform, the container components can realize a life cycle management of functional modules. A resource control center determines functional modules required by a business system and the deployment number of each of the functional modules according to an access requirement of the business system; allocating container components corresponding to the deployment number of each of the functional modules according to the deployment number of each of the functional modules; binding each of the functional modules with the corresponding container components; and in response to a binding of a container component and a functional module, loading and running the functional module by the container component to complete a deployment of the functional module, which can realize the evaluation, automatic deployment and running of the resources required by the business system to be accessed, and greatly improve the access efficiency of the business system.

FIG. 2

## Description

### TECHNICAL FIELD

The present disclosure relates to the fields of smart search, information flow, big data, distributed systems, cloud computing and the like in data processing, and in particular, to an access processing method, a device, a storage medium and a program product.

### BACKGROUND

With the development of computer technologies, a service platform (such as a cloud server or a cloud service platform, a cluster, etc.) that can provide a large number of physical resources and business functions has occurred. The service platform provides a large number of physical resources and a plurality of functional modules. A user (access party) can access the service platform according to their own business requirements, and use a functional module provided by the service platform to realize the required business system function. A user's business system generally includes a plurality of stages, and each stage is composed of one or more functional modules. Each functional module has a different processing capacity, and data scales of different business scenarios are also different.

In order to support an access of different business scenarios of a business party, the service platform often needs to carry out a relatively complex resource evaluation and deployment process. On one hand, a complex evaluation process requires the business party to deeply understand details and principles of the functional module provided by the service platform. On the other hand, it also requires a personnel familiar with the functional module of the service platform to connect and deeply participate in evaluation and deployment process, thus consuming a lot of manpower and has low efficiency.

### SUMMARY

The present disclosure provides an access processing method, a device, a storage medium and a program product.

According to a first aspect of the present disclosure, an access processing method is provided, including:

determining, according to an access requirement of a business system, functional modules required by the business system and the deployment number of each of the functional modules;
allocating, according to the deployment number of each of the functional modules, container components corresponding to the deployment number for each of the functional modules; and
binding each of the functional modules with the corresponding container components.

According to a second aspect of the present disclosure, an access processing method is provided, including: in response to a binding of a container component and a functional module, loading and running the functional module by the container component to complete a deployment of the functional module.

According to a third aspect of the present disclosure, an access processing device is provided, including:

a requirement processing module, configured to determine, according to an access requirement of a business system, functional modules required by the business system and the deployment number of each of the functional modules;
a container component allocating module, configured to allocate, according to the deployment number of each of the functional modules, container components corresponding to the deployment number for each of the functional modules; and
a deploying module, configured to bind each of the functional modules with the corresponding container components.

According to a fourth aspect of the present disclosure, an access processing device is provided, including: a business deploying module, configured to in response to a binding of a container component and a functional module, load and run the functional module by the container component to complete a deployment of the functional module.

According to a fifth aspect of the present disclosure, an electronic device is provided, including:

at least one processor; and
a memory in communicational connection with the at least one processor; where,
the memory stores instructions executable by the at least one processor, the instructions are executed by the at least one processor to enable the at least one processor to execute the method described in any of the above aspects.

According to a sixth aspect of the present disclosure, a non-transitory computer-readable storage medium storing computer instructions is provided, where the computer instructions are used to cause a computer to execute the method described in any of the above aspects.

According to a seventh aspect of the present disclosure, a computer program product is provided, the computer program product includes: a computer program which is stored in a readable storage medium, at least one processor of an electronic device can read the computer program from the readable storage medium, and the at least one processor executes the computer program to cause the electronic device to execute the method described in any of the above aspects.

The technology according to the present disclosure improves the efficiency of business access.

It should be understood that the contents described in this part are not intended to identify key or important features of the embodiments of the present disclosure, nor are they intended to limit the scope of the present disclosure. Other features of the present disclosure will be easily understood by the following description.

## BRIEF DESCRIPTION OF DRAWINGS

The accompanying drawings are used to better understand solutions, but do not limit the present disclosure. In the accompanying drawings:

FIG. 1 is an architecture schematic diagram of a service platform according to an embodiment of the present disclosure.

FIG. 2 is a flowchart of an access processing method according to a first embodiment of the present disclosure.

FIG. 3 is a flowchart of a method for creating and registering a container component according to a second embodiment of the present disclosure.

FIG. 4 is a flowchart of a method for pre-access pre-processing according to a third embodiment of the present disclosure.

FIG. 5 is another architecture schematic diagram of a service platform according to an embodiment of the present disclosure.

FIG. 6 is a schematic diagram of an access processing device according to a fourth embodiment of the present disclosure.

FIG. 7 is a schematic diagram of an access processing device according to a fifth embodiment of the present disclosure.

FIG. 8 is a schematic diagram of an access processing device according to a sixth embodiment of the present disclosure.

FIG. 9 is a schematic diagram of an access processing device according to a seventh embodiment of the present disclosure.

FIG. 10 is a block diagram of an electronic device for implementing an access processing method according to an embodiment of the present disclosure.

## DESCRIPTION OF EMBODIMENTS

In the following, exemplary embodiments of the present disclosure are described in combination with the accompanying drawings, in which various details of the embodiments of the present disclosure are included to facilitate understanding, and they shall be considered as merely exemplary. Therefore, those skilled in the art should realize that various changes and modifications can be made to the embodiments described herein without departing from the scope of the present disclosure. Similarly, for the sake of clarity and conciseness, the description of well-known functions and structures is omitted in the following.

At present, many service platforms (such as cloud servers or cloud service platforms, clusters, etc.) can provide a large number of physical resources and business functions. A user of the platform (an access party of a business system) can access the service platform, realize his own business system and provide businesses to the outside by the physical resources and business functions provided by the service platform. The service platform provides a large number of physical resources and a plurality of functional modules. The user (access party) can access the service platform according to his own business requirement, and use functional modules provided by the service platform to realize the required business system function. A user's business system generally includes a plurality of stages, and each stage is composed of one or more functional modules. Processing capacities of different functional modules are different, and data scales of different business scenarios are also different.

Exemplarily, taking a retrieval platform as an example, the retrieval platform provides external business functions of a retrieval system, including a plurality of functional modules, such as a sorting module, an estimating module, an inverted recall module, an approximate nearest neighbor (ANN) recall module, etc. Generally, a complete retrieval system generally includes multiple stages such as recall and sorting. Each stage is composed of one or more functional modules. The processing capacities of different functional modules are also different, and data scales of different businesses and different retrieval scenarios are also different.

In order to support accesses of different business retrieval scenarios, it is often necessary to carry out a relatively complex resource evaluation and deployment processes, such as calculating resource consumption and the number of copies of each functional module according to a zipper length, data scale and word segmentation granularity. On one hand, a complex evaluation process requires the business party to deeply understand the details and principles of the retrieval system, which is not very friendly to the business party. On the other hand, it also requires a personnel familiar with the retrieval system to take charge and deeply participate in the evaluation and deployment process, which consumes a lot of manpower and has low efficiency.

For example, taking the retrieval system as an example, the accesses of different businesses and different retrieval scenarios often require the business party to provide at least the following information:

1. A total number and an average size of retrieved documents which affect a hierarchical way of an index database and a positive ranking database;
2. A word segmentation mode and an average field size which affect a hierarchical way of an index database and a positive ranking database;
3. A request traffic size and request characteristics which affect the number of copies and the mode of building and retrieving data;
4. Whether to enable semantic retrieval, error correction, synonym expansion, etc., which affects integration and deployment of functional units.

The above information determines a result of capacity evaluation and deployment solution, however, normally, the business party is required to have a deep understanding of the retrieval field for provision of these information, which raises a threshold for business access to a certain extent. On the other hand, different retrieval requirements will form different deployment solutions, which greatly affects the efficiency and cost of the deployment.

At present, by dividing the functional units, resource consumption required by each functional unit is evaluated according to an access requirement, the deployment solution is integrated, and finally deployment steps of respective functional units are implemented. In this way, the complexity of business access is directly related to the complexity of the system itself. Taking an open-source search engine Elasticsearch as an example, the resource evaluation and deployment process roughly includes the following.

1. Estimation of a data volume

$$1) \text{ Total data volume (GB)} = \text{raw data volume (GB) generated per day} \times \text{retention days} \times \text{net expansion coefficient} \times (\text{number of deployed copies} + 1).$$

$$2) \text{ Disk storage (GB)} = \text{total data volume (GB)} \times (1 + 0.15 + 0.05).$$

$$3) \text{ Data nodes} = \lceil \text{disk storage (GB) / amount of memory per data node/memory: data ratio} \rceil + 1;$$

2. Sharding estimation

$$1) \text{ Total number of shards} = \text{number of indexes} \times \text{number of main shards} \times (\text{number of copies of shards} + 1) \times \text{retention interval}$$

2) Total number of data nodes = $\lceil$ total number of shards / (20 × memory size per node) $\rceil$;

3. Throughput estimation

1) Peak number of threads = $\lceil$ Number of peak retrieval requests per second - average response time of each request (milliseconds) / 1000$\rceil$;

2) Thread queue size = $\lceil$ (Number of physical CPU cores per node - number of threads per core × 3 / 2) + 1$\rceil$;

3) Total number of data nodes = $\lceil$ peak number of threads / thread queue size$\rceil$.

$\lceil$ $\rceil$ means rounding up.

Key parameters finally obtained are the total required disk size, the number of data nodes, the size of shards, the number of CPU cores, etc., and then a corresponding deployment adjustment solution is carried out according to these parameters. Acquiring the above information often requires the business party to have a deep understanding of the retrieval field, which raises the threshold for business party to a certain extent. On the other hand, different retrieval requirements will form different deployment solutions, which greatly affects the efficiency and cost of deployment.

The present disclosure provides an access processing method, a device, a storage medium and a program product, which are applied to the fields of smart search, information flow, big data, distributed system, cloud computing and the like in data processing, so as to improve the efficiency of business access.

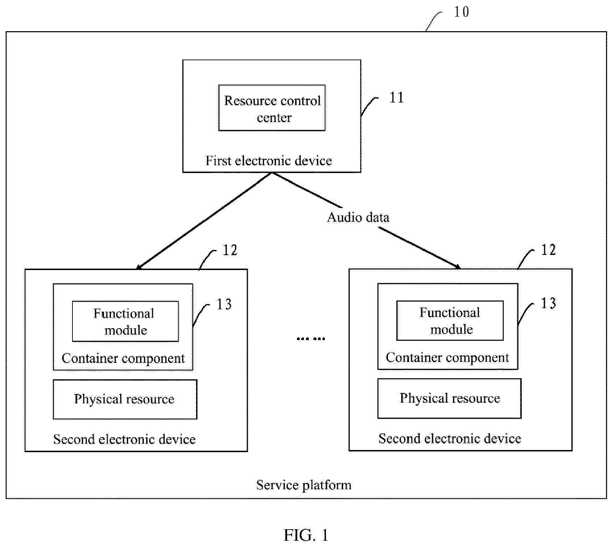

The access processing method provided by the present disclosure can be specifically applied to a service platform that can provide a large number of physical resources and business functions externally, such as a retrieval platform. Exemplarily, an architecture of a service platform is shown in FIG. 1. A service platform 10 includes a first electronic device 11 and a second electronic device 12, where the first electronic device 11 is a resource control center, and the number of second electronic devices 12 can be multiple. Each second electronic device creates at least one container component 13 and provides physical resources (such as CPU, memory, etc.) required by the container component 13. The service platform 10 provides a plurality of functional modules externally. The container component 13 is a component hosting the functional modules, which is used to realize a management of a life cycle of each functional module, including a creation, deployment, update and destruction of the functional module. The resource control center is configured to determine the functional modules required by a business system to be accessed and the deployment number of functional modules according to the access requirement, allocate container components to the business system, and realize automatic deployment and running of the functional modules required by the business system by the container components.

The access processing method provided by the present disclosure, by automatically determining functional modules required by a business system and the deployment number of each of the functional modules according to the access requirement of the business system, and allocating container components corresponding to the deployment number of each of the functional modules according to the deployment number of each of the functional modules; binding each of the functional modules with the corresponding container components, loading and running the functional module by the container components to complete a deployment of the functional module, which can realize the evaluation, automatic deployment and operation of the resources required by the business system to be accessed, and greatly improve the access efficiency of the business system.

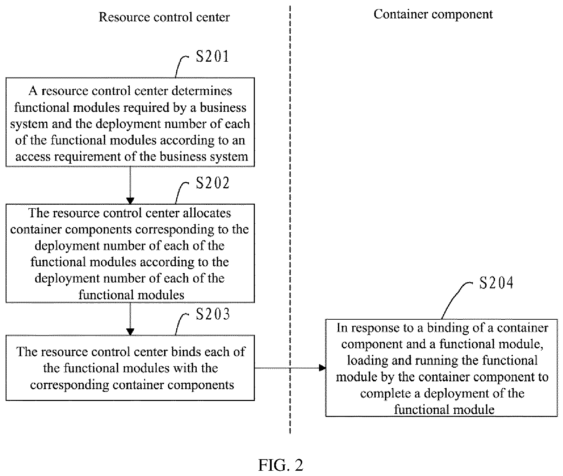

FIG. 2 is a flowchart of an access processing method according to a first embodiment of the present disclosure. The access processing method provided in this embodiment can be applied to any of the above service platforms. The service platform can be a cloud server, a cloud service platform, or a cluster, etc., and can also be implemented by other devices, which is not specifically limited in this embodiment.

In this embodiment, the service platform provides a plurality of functional modules and physical resources required to run the plurality of functional modules. The service platform includes a resource control center and a container component, and the container component has corresponding physical resources.

As shown in FIG. 2, specific steps of this method are as follows:
Step S201, a resource control center determines functional modules required by a business system and the deployment number of each of the functional modules according to an access requirement of the business system.

In this embodiment, the resource control center can determine functional modules required by the business system according to the access requirement of the business system, automatically estimate the number of copies of each of the functional modules, and determine the deployment number of each of the functional modules. The deployment number of any functional module is equal to the number of copies of the functional module plus 1.

Exemplarily, the resource control center can be implemented in the form of business controller page (BCP) or developed in other ways, which is not specifically limited in this embodiment.

Step S202, the resource control center allocates container components corresponding to the deployment number of each of the functional modules according to the deployment number of each of the functional modules.

After determining the deployment number of each of the functional modules, the resource control center can allocate container components corresponding to each of the functional modules. The container components corresponding to the functional module are configured to automatically realize a life cycle management of the functional module, including a creation, deployment, update and destruction of the functional module.

In this step, container components are allocated to the functional module according to the deployment number of the functional module. The number of container components allocated is consistent with the deployment number of the functional module, so that the functional modules and each copy thereof can be deployed in different container components independently.

Exemplarily, the container component in this embodiment can adopt a Box component to realize a container component for hosting a functional module, and can realize the life cycle management of a respective functional module.

Step S203, the resource control center binds each of the functional modules with the corresponding container components.

After assigning corresponding container components to functional modules, each of the functional modules can be bound to the corresponding container components. Based on a binding relationship between the functional module and container components, the container components in which the functional module are deployed can be determined to realize a mutual discovery between functional modules.

Step S204, in response to a binding of a container component and a functional module, loading and running the functional module by the container component to complete a deployment of the functional module.

After the container component is bound with the functional module, the container component automatically loads and runs the bound functional module, so as to automatically deploy the functional module in a corresponding container component.

After the functional modules required by the business system to be accessed are deployed into the corresponding container components, the access of business system is completed.

In the embodiment of the present disclosure, by creating a plurality of container components on the service platform, the container components can realize a life cycle management of the functional module. A resource control center determines functional modules required by a business system and a deployment number of each of the functional modules according to an access requirement of the business system; allocating container components corresponding to the deployment number of each of the functional modules according to the deployment number of each of the functional modules; binding each of the functional modules with the corresponding container components; and in response to a binding of a container component and a functional module, loading and running the functional module by the container component to complete a deployment of the functional module, which can realize the evaluation, automatic deployment and running of the resources required by the business system to be accessed, and greatly improve the access efficiency of the business system.

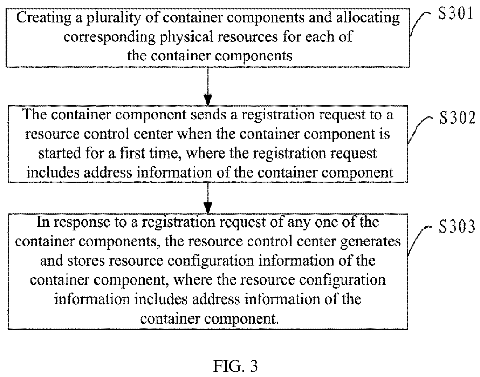

FIG. 3 is a flowchart of a method for creating and registering a container component according to a second embodiment of the present disclosure. On the basis of the above first embodiment, in this embodiment, before a business access, a plurality of container components need to be created on the service platform in advance in a preprocessing stage to allocate corresponding physical resources to each of the container components. By creating the plurality of container components in advance, a life cycle management of the functional module is realized by the container components, including a creation, deployment, update and destruction of the functional module, and an isolation between different functional modules or different copies of a functional module can be realized, and when a functional module in one container component is abnormal, it will not affect a normal running of a functional module in other container components, thus enhancing the reliability and stability of the business system.

Optionally, resource combinations of at least one configuration specification can also be configured, each of the resource combinations includes a plurality of container components, and total amounts of physical resources corresponding to the container components contained in the resource combinations of different configuration specifications are different. According to different access requirements, resource combinations of appropriate configuration specifications can be selected or recommended for the access requirements. After selecting the configuration specification, the access party can allocate a target resource combination of a corresponding configuration specification for the business system to be accessed, and the container components and corresponding physical resources contained in the target resource combination can be used to realize the access of the business system. A standardized system access solution can be provided in the way of resource combinations, and the business party only needs to select an appropriate configuration specification without manual estimation of complex parameters, thus reducing a threshold and cost of business access and improving the efficiency of business access.

Before accessing the business system, the preprocessing stage mainly includes the process of configuring the container components and the resource combination of at least one configuration specification, as well as a registration of the container components.

As shown in FIG. 3, creation and registration of the container components are as follows:
Step S301, creating a plurality of container components and allocating corresponding physical resources for each of the container components.

In this embodiment, a large number of container components can be created in advance according to all physical resources included in the service platform, and the corresponding physical resources can be allocated to each of the container components in advance.

One functional module can be deployed in each of the container components, and the life cycle management of the functional module can be realized by the container component, including the creation, deployment, update and destruction of the functional module. According to address information of the container component, the functional module deployed in the container component can be found and called. When the functional module in the container component is running, the physical resources corresponding to the container component can be used.

In addition, the number of physical resources corresponding to each of the container components can be different, and the physical resources corresponding to the container component can be set and adjusted according to the actual application scenario, which is not specifically limited in this embodiment.

After creating a container component, the container component can automatically register with a resource control center. A registration process of the container component can be realized by the following steps S302-S303.

Step S302, the container component sends a registration request to the resource control center when the container component is started for a first time, where the registration request includes address information of the container component.

In this embodiment, when any one of the container components is started, said container component can automatically send a registration request containing the address information of the container component to the resource control center.

The address information of the container component refers to an access address required to access the functional module in the container component, and can include an IP address and a port of the container component.

Step S303: in response to a registration request of any one of the container components, the resource control center generates and stores resource configuration information of the container component, where the resource configuration information includes address information of the container component.

After receiving the registration request of any one of the container components, the resource control center can generate and store, for a newly registered container component, the resource configuration information of the container component to complete a registration of the container component.

The resource configuration information at least includes address information of the container component. Different container components have different resource configuration information, which can be distinguished by unique resource configuration identifiers of the resource configuration information.

The resource configuration identifier may be generated by the resource control center according to a preset rule, or it can be the address information of the container component or other information that can uniquely identify the container component, which is not specifically limited here. The preset rule may be a sequence number, a registration time, etc., which may be set according to the requirements of actual application scenarios, and are not specifically limited here.

Exemplarily, the resource configuration information of the container components can be stored in a distributed file system (DFS), and the resource control center can assign a globally unique DFS resource configuration identifier to each of the container components, which can uniquely identify DFS resource configuration information of a container component (which can be recorded as ConfKey).

In addition, the DFS resource configuration information of the container component can include running status information of the container component, information of the hosted functional module, etc. The running status information of the container component is used to describe a running status of the container component, including heartbeat detection information, resource occupancy, etc.

After completing the registration, the container component can update its own resource configuration information in real time according to its own running status information. In this way, real-time running status information of the container component can be stored in the resource configuration information of the container component, and the resource control center can acquire the running status information of the container component from the resource configuration information, so as to provide a data basis for the resource control center to replace an abnormal container component.

In this embodiment, resource combinations of at least one configuration specification can also be configured, each of the resource combinations includes a plurality of container components, and total amounts of physical resources corresponding to the container components contained in the resource combinations of different configuration specifications are different.

Exemplarily, a high-performance/low latency resource combination A, a high-capacity resource combination B, a low-cost resource combination C, and the like can be configured.

Exemplarily, a plurality of different specification levels may be divided according to indicators such as cost and performance, and each specification level may include a plurality of resource combinations of different configuration specifications.

For example, the following three different specification levels can be divided according to cost: a low-cost resource combination, a medium-cost resource combination and a high-cost resource combination. The medium-cost resource combination may further include a high-performance/low latency resource combination A, a high-capacity resource combination B, a low-cost resource combination C, etc. In addition, the high-cost resource combination may include a high-performance/low latency resource combination AI, a high-capacity resource combination BI, etc., but the configuration of the high-performance/low latency resource combination AI in the high-cost resource combination is relatively lower and the cost is lower than that of the high-performance/low latency resource combination A in the medium-cost resource combination.

For example, assuming that the business system to be accessed is a log retrieval scenario, which does not require too much in terms of retrieval latency, the lower the expected cost the better, and queries per second (QPS) of a retrieval request is about 10, then a high-capacity/low-cost package can be selected, and the number of copies of the functional modules can be 2, that is, the number of deployments of each of the functional modules is 3.

In addition, a setting of the configuration specifications of the resource combinations, the number of container components contained in the resource combination of each of the configuration specifications and the corresponding physical resources can be set and adjusted according to an actual application scenario, which is not specifically limited in this embodiment.

According to different access requirements, resource combinations of appropriate configuration specifications can be selected or recommended for the access requirements. After selecting the configuration specification, the access party can allocate a target resource combination of a corresponding configuration specification for the business system to be accessed, and the container components and corresponding physical resources contained in the target resource combination can be used to realize the access of the business system. A standardized system access solution can be provided in the way of resource combinations, and the business party only needs to select an appropriate configuration specification without manual estimation of complex parameters, thus reducing a threshold and cost of business access and improving the efficiency of business access.

In the embodiment of the present disclosure, before accessing the business, in the preprocessing stage, a plurality of container components are created on the service platform in advance, physical resources corresponding to each of the container components are allocated, and an automatic registration of the container components is realized. In addition, resource combinations of at least one configuration specification can be configured, each of the resource combinations includes a plurality of container components, and total amounts of physical resources corresponding to the container components contained in the resource combinations of different configuration specifications are different, in this way, a normalized and standardized system access solution can be provided in the way of resource combinations, thus realizing the standardization of capacity and deployment solution of the business system, the business party only needs to select an appropriate configuration specification without manual estimation of complex parameters, thus reducing a threshold and deployment cost of business access and improving the efficiency of business access.

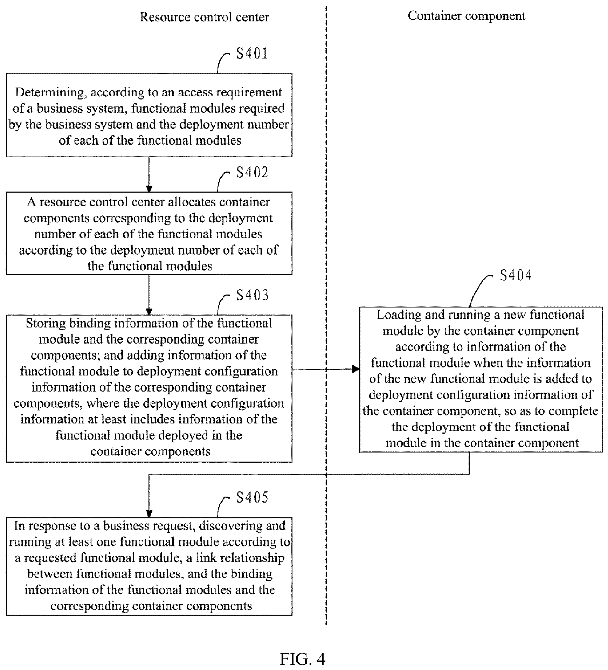

FIG. 4 is a flowchart of a method for pre-access pre-processing according to a third embodiment of the present disclosure. On the basis of the above-mentioned first or second embodiment, in this embodiment, after completing the deployment of the business system, in response to a business request, at least one functional module is found and run according to a requested functional module, a link relationship between the functional modules, and binding information between a functional module and a corresponding container component, automatic discovery and running between functional modules can be realized.

Step S401, determining, according to an access requirement of a business system, functional modules required by the business system and the deployment number of each of the functional modules.

In this embodiment, a resource control center can determine functional modules required by the business system according to the access requirement of the business system, automatically estimate the number of copies of each of the functional modules, and determine the deployment number of each of the functional modules. The deployment number of any functional module is equal to the number of copies of the functional module plus 1.

Exemplarily, the resource control center can be implemented in the form of business controller page (BCP) or developed in other ways, which is not specifically limited in this embodiment.

Optionally, the access requirement includes at least one of the following: an overall request amount and a data amount of the business system. This step can be specifically implemented as follows:

determining, according to the overall request amount and the data amount of the business system, the functional modules required by the business system and the deployment numbers of the functional modules.

In this way, the access party only needs to provide easy-to-obtain simple parameters such as the overall request volume and the data amount of the business system to be accessed, without estimating complex parameters, and a service platform will automatically determine the resource combination of an appropriate configuration specification for the business system to be accessed, and complete the deployment of the business system, which can reduce a threshold and cost of business access and improve the efficiency of business access.

Optionally, the access requirement may also include an acceptable cost budget and the like.

Optionally, the service platform can provide a visual interactive interface, and through the visual interactive interface, the access party can input access requirements and submit them to the resource control center.

Optionally, this step may be performed by the resource control center, or may be performed by other devices equipped with the service platform, which is not specifically limited here.

Step S402, the resource control center allocates container components corresponding to the deployment number of each of the functional modules according to the deployment number of each of the functional modules.

In this embodiment, the resource control center can determine functional modules required by the business system according to the access requirement of the business system, automatically estimate the number of copies of each of the functional modules, and determine the deployment number of each of the functional modules. The deployment number of any functional module is equal to the number of copies of the functional module plus 1.

In an optional implementation, if resource combinations of at least one configuration specification are configured, a target resource combination corresponding to the business system to be accessed can be automatically adapted according to the access requirement, and the business system uses resources in the target resource combination.

When container components are allocated for a functional module required by a business system, the container components included in the target resource combination corresponding to the business system are allocated to the functional module. This step can be implemented as follows:

determining, according to a target resource combination corresponding to the business system, container components in an idle state in the target resource combination; and allocating, according to the deployment number of each of the functional modules, the container components in the idle state in the target resource combination for each of the functional modules respectively. In this way, container components can be automatically allocated to a functional module without manual operation and intervention, thus improving the efficiency of business access.

A container component in an idle state refers to a container component that has not yet been deployed with a functional module.

Exemplarily, assuming that the total deployment number of functional modules required by the business system is N, the resource control center can select N container components (such as box component instances) in an idle state from the target resource combination corresponding to the business system, and allocate container components corresponding to the deployment number of each of the functional modules.

Exemplarily, where the adapting a target resource combination corresponding to the business system to be accessed automatically according to the access requirement can be implemented as follows:

determining, according to the access requirement, configuration specifications of resource combinations corresponding to the access requirement; and allocating, according to the configuration specifications, the target resource combination for the business system, where the target resource combination is any resource combination of the resource combinations. In this way, the service platform can automatically determine the target resource combination of the configuration specification matching the access requirement according to the access requirement, which improves the access efficiency.

Optionally, the service platform can provide a visual interactive interface, through which a plurality of parameter options and alternative options corresponding to each of the parameter options can be displayed, and each of the parameter options can involve cost, data amount, performance (such as delay time), etc., the alternative options of each of the parameter options can be set according to specific parameter options. A user can select an alternative option corresponding to his own access requirement for each of the parameter options according to his own requirement. The service platform can determine a configuration specification of the resource combination suitable for the user according to the alternative option selected by the user.

Optionally, the service platform can provide a visual interactive interface, through which information of the configuration specification of the resource combination configured on the service platform can be displayed, for example, the data amount, request amount, required cost etc. that can be supported by the resource combination of the configuration specification, the access party can independently select its own configuration specification and submit it to the resource control center. The resource control center allocates the target resource combination with the specified configuration specification to the business system to be accessed according to the configuration specification specified by the access party.

In another optional implementation, if resource combinations of at least one configuration specification are not configured, according to the access requirement, the resource control center may select a container component in the idle state from all the container components of the service platform according to the deployment number of each of the functional modules, and allocate container components corresponding to the deployment number of each of the functional modules.

Step S403, storing binding information of the functional module and the corresponding container components; and adding information of the functional module to deployment configuration information of the corresponding container components, where the deployment configuration information at least includes information of the functional module deployed in the container components.

In this step, by storing the binding information of the functional module and the corresponding container components, and adding the information of the functional module to the deployment configuration information of the corresponding container components, so that any functional module is bound to the corresponding container components.

The binding information of the functional module and the corresponding container components includes a mapping relationship between the functional module and the container components in which the functional module is deployed.

Exemplarily, each of the functional modules corresponds to a piece of binding information, including information that the functional module is deployed in all container components, and based on the binding information, the functional module is bound to the container components in which the functional module is deployed.

Optionally, the binding information corresponding to each of the functional modules may include address information of the container components in which the functional module is deployed.

For example, the binding information of the functional module and the corresponding container components can be stored in a DFS, and the resource control center can assign a globally unique DFS binding information identifier (which can be recorded as DFSKey) to each of the functional modules, which can uniquely identify DFS binding information of one functional module. The DFS binding information of one functional module includes address information of the container components deployed by the functional module. The address information of the container components where the functional module is located can be acquired by the DFS binding information of the functional module, and the functional module can be called and run according to the address information of the container components where the functional module is located.

By the binding information of the functional module and the corresponding container components, a mapping relationship between the functional module and the container components in which the functional module is deployed can be established, thus providing a data basis for discovering and running the functional module.

In this embodiment, the deployment configuration information may further include information of the functional module deployed in the container component. The container component can monitor its own deployment configuration information in real time. When the information of the functional module in the deployment configuration information changes, the container component can execute the deployment, update, and destruction of the corresponding functional module.

In this step, by adding the information of the functional module to the deployment configuration information of the corresponding container components, the container component can be triggered to load and run a new functional module, thereby completing an automatic deployment of the functional module in the container components.

Step S404, loading and running a new functional module by the container component according to information of the functional module when the information of the new functional module is added to deployment configuration information of the container component, so as to complete the deployment of the functional module in the container component.

In this embodiment, the deployment configuration information may further include information of the functional module deployed in the container component. The container component can monitor its own deployment configuration information in real time. When the information of the functional module in the deployment configuration information changes, the container component can execute the creation, deployment, update, and destruction of the corresponding functional module.

When the information of the new functional module is added to the deployment configuration information of the container component, the container component loads the new functional module into the container component according to the information of the new functional module, and runs the new functional module to realize the automatic creation and deployment of the new functional module.

Optionally, in response to an update instruction for a deployed functional module in the container component, deleting the deployed functional module by the container component, and loading and running the updated functional module, in this way, the automatic update of the functional module can be realized, which is convenient for the update and maintenance of the functional module, and is convenient and quick.

Exemplarily, the update operation of the deployed functional module in the container component may be implemented by modifying the information of the functional module in the deployment configuration information of the container component. When the information of the functional module in the deployment configuration information of the container component is updated, the container component deletes the deployed functional module, and loads and runs an updated functional module according to the information of the updated functional module.

Optionally, after the deployment of the business system is completed, changes can also be made to the connected business system, including but not limited to adding a new functional module, adding a copy of an existing functional module, the functional module of the business system can be easily extended or changed, the container component(s) in the idle state is (are) allocated for the newly added functional module or copy by the resource control center, and the functional module is bound with the corresponding container component, which is similar to steps S402-S404 and will not be repeated here.

After the deployment of the business system is completed, the response to the business request of the business system is realized by step S405, and the functional modules in the business system can be found and run automatically according to a link relationship between functional modules, and the binding information of the functional modules and the corresponding container components.

Step S405, in response to a business request, discovering and running at least one functional module according to a requested functional module, a link relationship between functional modules, and the binding information of the functional modules and the corresponding container components.

The requested functional module may refer to a first functional module that needs to be executed in response to the business request.

The link relationship between functional modules is a link topology relationship between the functional modules, including an execution sequence of the functional modules and a mutual call relationship, etc. The execution sequence of the functional modules in a process of realizing a business process corresponding to a business system can be determined according to the link relationship between the functional modules.

Exemplarily, this step can be specifically implemented as follows:

in response to the business request, determining at least one functional module to be run and a running sequence of the at least one functional module according to the requested functional module and a link relationship between functional modules; determining, according to the binding information of the functional module and the corresponding container components, the container components corresponding to the functional module when any functional module needs to be run; and calling the functional module according to address information of the container components corresponding to the functional module. In this way, according to the link relationship between functional modules and the binding information of the functional modules and the corresponding container components, the functional modules in the business system can be found and run automatically.

In this embodiment, if the deployment number of a functional module is greater than 1, that is, at least one copy of the functional module is deployed, there are a plurality of container components corresponding to the functional module.

Optionally, a container component can be randomly selected from the plurality of container components corresponding to the function module as a target component, and the function module deployed in the target component can be called according to the address information of the target component.

Optionally, calling the functional module according to address information of the container components corresponding to the functional module can be implemented as follows:

taking one container component in at least one container component as a target component according to running status information of the at least one container component corresponding to the functional module; and calling the functional module deployed inside the target component according to address information of the target component.

Exemplarily, according to running status information of at least one container component corresponding to the functional module, a container component with best running status in the at least one container component can be regarded as the target component, and the functional module deployed in the container component with the best running status can be called, which can realize a load balancing of the container component and improve the performance of the business system.

Optionally, the resource control center may further acquire the running status information of the container components in real time, if it is determined that any one of the container components meets a replacement condition according to the running status information of the container components, migrating a functional module in said container component to another container component in an idle state; and unbinding the functional module in said container component and said container component, and binding the functional module in said container component with the another container component.

The replacement condition includes at least one of the following: a device where a container component is located is disconnected, and an occupancy rate of physical resources corresponding to a container component is greater than or equal to a resource occupancy threshold.

Exemplarily, the replacement condition can include that a device where a container component is located is disconnected, and the resource control center can find a container component whose deployed functional module cannot run due to a disconnection of the device where it is located, and can timely migrate the functional module deployed in the container component to another container component that runs normally, so that a copy keep-alive mechanism of the functional module in the container component is implemented, thereby ensuring a normal running of the functional module and improving the reliability and stability of the business system.

Exemplarily, when the occupancy rate of the physical resources corresponding to a certain container component is large, performance of the functional module will be degraded, that is, a container component hotspot will appear. The replacement condition can include that the occupancy rate of the physical resources corresponding to the container component is greater than or equal to a resource occupancy threshold, and the resource control center can find a container component with poor performance due to a high occupancy rate of physical resources, and migrate the functional module deployed in the container component to another container component that runs normally, so as to realize a hotspot self-healing mechanism of the container component and reduce the delay of the business system.

In addition, the replacement conditions can also include other conditions, for example, a heartbeat detection delay is greater than or equal to a delay threshold, which can be set and adjusted according to an actual application scenario, and the resource occupancy threshold can also be set and adjusted according to the requirements of the actual application scenario, which is not specifically limited.

Optionally, unbinding the functional module in the container component and the container component can be implemented as follows:

deleting binding information of the functional module in the container component and the container component; and deleting information of the functional module in deployment configuration information of the container component.

By deleting the binding information of the functional module in an abnormal container component and the container component, the binding relationship of the abnormal container component and the functional module can be released. When the functional module needs to be called, the functional module in the abnormal container component will not be called, so as to avoid a situation that the called functional module cannot run normally, thereby improving the reliability and stability of the business system.

Further, by deleting the information of the functional module in deployment configuration information of any one of the container components, the container component can be triggered to delete the deployed functional module, thereby releasing the container component, which can save the container component and physical resources.

When the information of the functional module in the deployment configuration information of a container component is deleted, the container component deletes the deployed functional module, thereby releasing the container component, which can save the container component and physical resources.

In an optional implementation of this embodiment, the resource control center may further acquire resource usage information and running status information of at least one container component according to a resource auditing requirement, and displaying the resource usage information and running status information of the at least one container component, so as to implement a resource auditing function.

The resource auditing requirement includes various pieces of information required for resource audit, which can be specifically set and adjusted according to an audit requirement in an actual application scenario, which is not specifically limited in this embodiment.

In addition, the resource control center can also extend other functions besides resource auditing according to the requirements of actual application scenarios, such as a resource usage ratio statistic, abnormal container component information, etc., the corresponding information can be acquired and displayed by the resource control center.

Exemplarily, DFS can be used to store the binding information of the functional module and the corresponding container components, the deployment configuration information of the container components, and the link relationship between the functional modules. The registration of the container components, the discovery between the functional modules, and the management and maintenance of the link relationship between functional modules can be realized by the DFS.

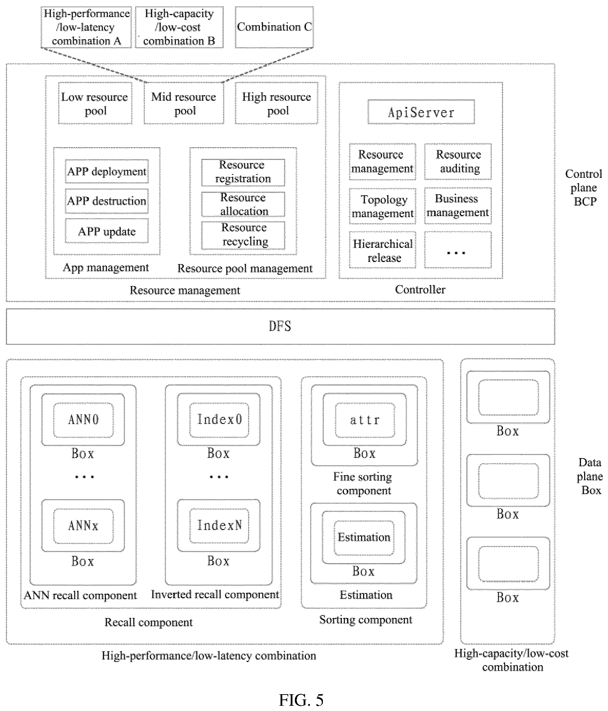

FIG. 5 provides a schematic architecture of a service platform. As shown in FIG. 5, taking a retrieval platform as an example, container components of the retrieval platform (Box shown in FIG. 5) are located on a data plane, a resource control center (BCP shown in FIG. 5) is located on a control plane, and both the resource control center and the container components can access data in the DFS. Resource combinations include: a high-performance/low-latency combination and a high-capacity/low-cost combination. An example is taken where the high-performance/low-latency combination is used by a retrieval system accessed, the high-performance/low-latency combination may include a recall component, a sorting component, etc., depending on functions implemented by the functional modules in the container components. The recall component may include an ANN recall component, an inverted recall component, etc., where both the ANN recall component and the inverted recall component may include a plurality of container components. The recall component can include a fine sorting component, and an estimation component and the like. Functional modules which can realize corresponding function are deployed in each of the container components. The container components in the high-capacity/low-cost combination shown in FIG. 5 are in an idle state.

The BCP as shown in FIG. 5, can realize resource management functions and controller functions. Resource management functions include: business system management, including the deployment, destruction and update of a business system (such as an APP, etc.). Resource pool management includes: resource registration, resource allocation, resource recycling, etc. BCP can maintain one or more resource pools (a Low resource pool, a Mid resource pool, and a High resource pool, etc. shown in FIG. 5), and each resource pool can be used to maintain one or more resource combinations (as shown in FIG. 5, the Mid resource pool can maintain a high-performance/low-latency combination A, a high-capacity/low-cost combination B, a combination C, etc.). When the container component is started, it needs to send a registration request to the BCP to register information of the container component in the resource pool to realize a registration of the container component. The BCP is further responsible for allocating corresponding container components to a functional module to realize resource allocation. When the functional component in the container component is deleted, the BCP can further recycle the container components to realize resource recycling.

The controller is mainly configured to provide interface services (ApiServer shown in FIG. 5), and implement resource management, resource auditing, topology management, business management, hierarchical release, etc. The resource management includes a management of the physical resources of the service platform and the like. Resource auditing includes acquiring and displaying information that needs to be audited according to a resource auditing requirement. Topology management includes a management and maintenance of a link topology relationship between functional modules. Business management includes a management of functions for realizing business, such as the release, update, and deletion of a functional module. Hierarchical release includes a division and release of a resource combination.

Based on the architecture shown in FIG. 5, Box registers with the BCP at the beginning of startup, and global resource control centers are assigned by BCP to assign a globally unique DFS resource configuration identifier (which can be recorded as ConfKey) for each of the container components, generate and store DFS resource configuration information of container components, and the DFS resource configuration identifier can uniquely identify DFS resource configuration information of one container component. Box monitors its own ConfKey, and makes corresponding processing when its own DFS resource configuration information changes, including: deployment, change, and destruction of a functional module. Box can also report to the DFS its running status information in real time, such as heartbeat detection information, address information, and information about the deployed functional module(s) etc., so as to update the running status information in the DFS resource configuration information. This embodiment provides a business data and capacity management mechanism based on resource combination division, which provides standardized system capabilities (including standardization of system capacity and standardization of deployment solution) in the way of resource combinations, and can reduce a threshold and deployment cost of business access to a complex system and improve the efficiency of business access. When accessing a business system, the BCP can filter out a Box in an idle state from a target resource combination corresponding to the access requirement, allocate the Box in the idle state to a functional module, and trigger the Box to automatically deploy a corresponding functional module by changing the DFS resource configuration information of the Box. In addition, the BCP can acquire the running status information of the Box from the DFS. When any Box is found to be abnormal or with poor performance, it can realize a migration of the functional module in the Box. A registration of a container component, an automatic deployment of a functional module, and a discovery between functional modules are realized by means of the DFS.

In the embodiment of the present disclosure, by creating a plurality of container components on a service platform, allocating corresponding physical resources for each of the container components, an automatic registration of the container components is realized; a life cycle management of the functional module is realized by the container components. The resource control center determines functional modules required by a business system and the deployment number of each of the functional modules according to an access requirement of the business system; allocates container components corresponding to the deployment number of each of the functional modules according to the deployment number of each of the functional modules; binds each of the functional modules with the corresponding container components; in response to a binding of a container component and a functional module, loading and running the functional module by the container component to complete a deployment of the functional module, which can realize the evaluation, automatic deployment and operation of the resources required by the business system to be accessed, and greatly improve the access efficiency of the business system. Further, by configuring resource combinations of at least one configuration specification, each of the resource combinations includes a plurality of container components, and total amounts of physical resources corresponding to the container components contained in the resource combinations of different configuration specifications are different, a normalized and standardized system access solution can be provided in the way of resource combinations, and the standardization of business system capacity and deployment solution can be realized.

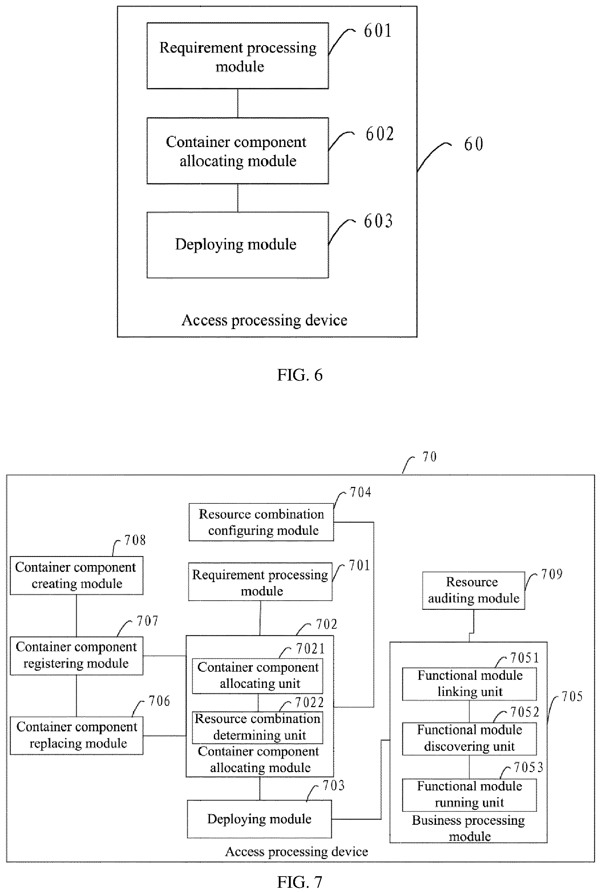

FIG. 6 is a schematic diagram of an access processing device according to a fourth embodiment of the present disclosure. The access processing device provided by the embodiment of the present disclosure can execute a method process performed by a resource control center in the embodiments of the access processing method. As shown in FIG. 6, the access processing device 60 includes: a requirement processing module 601, a container component allocating module 602 and a deploying module 603.

Specifically, the requirement processing module 601 is configured to determine, according to an access requirement of a business system, functional modules required by the business system and a deployment number of each of the functional modules.

The container component allocating module 602 is configured to allocate, according to the deployment number of each of the functional modules, container components corresponding to the deployment number for each of the functional modules.

The deploying module 603 is configured to bind each of the functional modules with the corresponding container components.

The device provided by the embodiment of the present disclosure can be specifically configured to execute the method process executed by the resource control center in the first embodiment, and the specific functions and technical effects will not be repeated here.

FIG. 7 is a schematic diagram of an access processing device according to a fifth embodiment of the present disclosure. The access processing device provided by the embodiment of the present disclosure can execute a method process performed by a resource control center in the embodiments of the access processing method. As shown in FIG. 7, the access processing device 70 includes: a requirement processing module 701, a container component allocating module 702 and a deploying module 703.

Specifically, the requirement processing module 701 is configured to determine, according to an access requirement of a business system, functional modules required by the business system and a deployment number of each of the functional modules.

The container component allocating module 702 is configured to allocate, according to the deployment number of each of the functional modules, container components corresponding to the deployment number for each of the functional modules.

The deploying module 703 is configured to bind each of the functional modules with the corresponding container components.

In an embodiment, the access requirement includes at least one of the following: an overall request amount and a data amount of the business system, where the requirement processing module 701 is further configured to:
determine, according to the overall request amount and the data amount of the business system, the functional modules required by the business system and the deployment numbers of the functional modules.

Optionally, as shown in FIG. 7, the container component allocating module 702 includes:
a container component allocating unit 7021, configured to determine, according to a target resource combination corresponding to the business system, container components in an idle state in the target resource combination; and allocate, according to the deployment number of each of the functional modules, the container components in the idle state in the target resource combination for each of the functional modules respectively.

Optionally, as shown in FIG. 7, the container component allocating module 702 further includes:
a resource combination determining unit 7022, configured to:
determine, according to the access requirement, configuration specifications of resource combinations corresponding to the access requirement; and allocate, according to the configuration specifications, the target resource combination for the business system, where the target resource combination is any resource combination of the resource combinations.

Optionally, as shown in FIG. 7, the access processing device 70 further includes:
a resource combination configuring module 704, configured to:
configure resource combinations of at least one configuration specification, each of the resource combinations includes a plurality of container components, and total amounts of physical resources corresponding to the container components contained in the resource combinations of different configuration specifications are different.

Optionally, the deploying module 703 is further configured to:
store binding information of the functional module and the corresponding container components; and add information of the functional module to deployment configuration information of the corresponding container components, where the deployment configuration information at least includes information of the functional module deployed in the container components.

Optionally, as shown in FIG. 7, the access processing device 70 further includes:
a business processing module 705, configured to:
in response to a business request, discover and run at least one functional module according to a requested functional module, a link relationship between functional modules, and the binding information of the functional modules and the corresponding container components.

Optionally, the business processing module 705 includes:

a functional module linking unit 7051, configured to in response to the business request, determine at least one functional module to be run and a running sequence of the at least one functional module according to the requested functional module and the link relationship between functional modules;

a functional module discovering unit 7052, configured to determine, according to the binding information of the functional module and the corresponding container components, the container components corresponding to the functional module when any functional module needs to be run; and

a functional module running unit 7053, configured to call the functional module according to address information of the container components corresponding to the functional module.

Optionally, the functional module running unit 7053 includes:

a container component screening subunit, configured to take one container component in the at least one container component as a target component according to running status information of the at least one container component corresponding to the functional module; and

a functional module running subunit, configured to call the functional module deployed inside the target component according to address information of the target component.

Optionally, as shown in FIG. 7, the access processing device 70 further includes:
a container component replacing module 706, configured to:

acquire the running status information of the container components in real time;

if it is determined that any one of the container components meets a replacement condition according to the running status information of the container components, migrate a functional module in the container component to another container component in an idle state; and

unbind the functional module in the container component and the container component, and bind the functional module in the container component with the another container component.

Optionally, the container component replacing module 706 is further configured to:
delete binding information of the functional module in the container component and the container component; and delete information of the functional module in deployment configuration information of the container component.

Optionally, the replacement condition includes at least one of the following: a device where a container component is located is disconnected, and an occupancy rate of physical resources corresponding to a container component is greater than or equal to a resource occupancy threshold.

Optionally, as shown in FIG. 7, the access processing device 70 further includes:
a container component registering module 707, configured to:
in response to a registration request of any one of the container components, generate and store resource configuration information of the container component, where the resource configuration information includes address information of the container component.

Optionally, as shown in FIG. 7, the access processing device 70 further includes:
a container component creating module 708, configured to create a plurality of container components and allocate corresponding physical resources for each of the container components.

Optionally, as shown in FIG. 7, the access processing device 70 further includes:
a resource auditing module 709, configured to acquire resource usage information and running status information of at least one container component according to a resource auditing requirement, and display the resource usage information and running status information of the at least one container component.

The device provided by the embodiment of the present disclosure can be specifically configured to execute the method process executed by the resource control center in the second or third embodiment, and the specific functions and technical effects will not be repeated here.

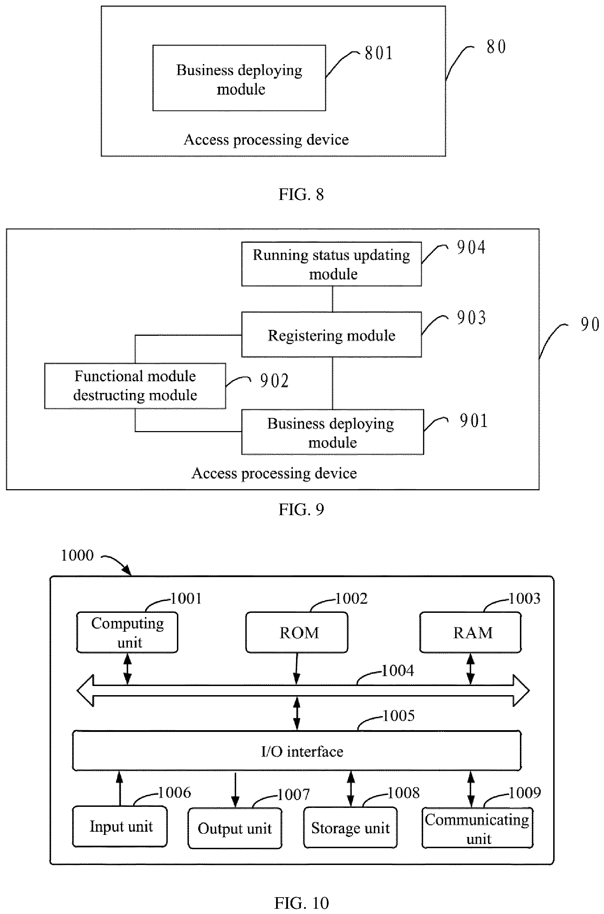

FIG. 8 is a schematic diagram of an access processing device according to a sixth embodiment of the present disclosure. The access processing device provided by the embodiment of the present disclosure can execute a method process executed by a container component or a device where the container component is located in the embodiments of the access processing method. As shown in FIG. 8, the access processing device 80 includes: a business deploying module 801.

Specifically, the business deploying module 801 is configured to in response to a binding of a container component and a functional module, load and run the functional module by the container component to complete a deployment of the functional module.

The device provided by the embodiment of the present disclosure can be specifically configured to execute the method process executed by the container component or the device where the container component is located in the first embodiment, and the specific functions and technical effects will not be repeated here.

FIG. 9 is a schematic diagram of an access processing device according to a seventh embodiment of the present disclosure. The access processing device provided by the embodiment of the present disclosure can execute a method process executed by a container component or a device where the container component is located in the embodiments of the access processing method. As shown in FIG. 9, the access processing device 90 includes: a business deploying module 901.

Specifically, the business deploying module 901 is configured to in response to a binding of a container component and a functional module, load and run the functional module by the container component to complete a deployment of the functional module.

The business deploying module 901 is specifically configured to:

load and run a new functional module by the container component according to information of the functional module when the information of the new functional module is added to deployment configuration information of the container component, so as to complete the deployment of the functional module in the container component.

Optionally, as shown in FIG. 9, the access processing device 90 further includes:

a functional module destructing module 902, configured to:

delete a deployed functional module in the container component when information of the functional module in deployment configuration information of the container component is deleted.

Optionally, as shown in FIG. 9, the access processing device 90 further includes:

a functional module updating module, configured to:

in response to an update instruction for a deployed functional module in the container component, delete the deployed functional module by the container component, and load and run the updated functional module.

Optionally, as shown in FIG. 9, the access processing device 90 further includes:

a registering module 903, configured to:

send a registration request to a resource control center when the container component is started for a first time, where the registration request includes address information of the container component.

Optionally, as shown in FIG. 9, the access processing device 90 further includes:

a running status updating module 904, configured to:

update resource configuration information of the container component according to running status information of the container component, where the resource configuration information includes the running status information of the container component.

The device provided by the embodiment of the present disclosure can be specifically configured to execute the method process executed by the container component or the device where the container component is located in the second or third embodiment, and the specific functions and technical effects will not be repeated here.

In the technical solution of the present disclosure, the collection, storage, use, processing, transmission, provision and disclosure of the user's personal information involved are all in accordance with the provisions of relevant laws and regulations, and do not violate public order and good customs.

According to an embodiment of the present disclosure, the present disclosure further provides an electronic device, a readable storage medium and a computer program product.

According to an embodiment of the present disclosure, the present disclosure further provides a computer program product, the computer program product includes: a computer program, which is stored in a readable storage medium, at least one processor of an electronic device can read the computer program from the readable storage medium, and at least one processor executes the computer program to cause the electronic device to execute the solution provided in any of the above embodiments.

FIG. 10 shows a schematic block diagram of an example electronic device 1000 that can be configured to implement an embodiment of the present application. The electronic device is intended to represent various forms of digital computers, such as a laptop computer, a desktop computer, a workstation, a personal digital assistant, a server, a blade server, a mainframe computer, and other suitable computers. The electronic device may also represent various forms of mobile apparatuses, such as a personal digital assistant, a cellular phone, a smart phone, a wearable device, and other similar computing apparatuses. Components shown herein, connections and relationships thereof, as well as functions thereof are merely examples and are not intended to limit implementations of the present application described and/or claimed herein.

As shown in FIG. 10, the electronic device 1000 includes a computing unit 1001 that may execute various appropriate actions and arrangements according to a computer program stored in read-only memory (ROM) 1002 or a computer program loaded into a random access memory (RAM) 1003 from the storage unit 1008. In the RAM 1003, various programs and data needed for the operation of the device 1000 can also be stored. The computing unit 1001, ROM 1002 and RAM 1003 are connected to each other through a bus 1004. An input/output (I/O) interface 1005 is also connected to the bus 1004.

A plurality of components in the device 1000 are connected to the I/O interface 1005, including: an input unit 1006, such as a keyboard, a mouse, etc.; an output unit 1007, such as various types of displays, loudspeakers, and the like; a storage unit 1008, such as a magnetic disk, an optical disk, etc.; and a communicating unit 1009, such as a network card, a modem, a wireless communication transceiver, and the like. The communicating unit 1009 allows the device 1000 to exchange information/data with other devices through a computer network such as Internet and/or various telecommunication networks.

The computing unit 1001 may be a variety of general and/or special processing components with processing and computing capabilities. Some examples of the computing unit 1001 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, etc. The computing unit 1001 executes various methods and processes described above, such as access processing method. For example, in some embodiments, the access processing method may be implemented as a computer software program that is tangibly contained in a machine-readable medium, such as a storage unit 1008. In some embodiments, some or all of the computer programs may be loaded and/or installed on device 1000 via ROM 1002 and/or communicating unit 1009. When the computer program is loaded into the RAM 1003 and executed by the computing unit 1001, one or more steps of the access processing method described above may be executed. Alternatively, in other embodiments, the computing unit 1001 may be configured to execute the access processing method by any other appropriate means (e.g., by means of firmware).

Various implementations of the systems and technologies described above herein can be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), computer hardware, firmware, software, and/or a combination thereof. These various embodiments may include: being implemented in one or more computer programs, the one or more computer programs may be executed and/or interpreted on a programmable system including at least one programmable processor, the programmable processor may be a dedicated or general programmable processor, and can receive data and instructions from a storage system, at least one input apparatus, and at least one output apparatus, and transmitting the data and instructions to the storage system, the at least one input apparatus, and the at least one output apparatus.

Program codes for implementing the method of the present disclosure may be written in any combination of one or more programming languages. These program codes may be provided to a processor or controller of a general computer, a dedicated computer, or other programmable data processing apparatus, so that when the program codes are executed by the processor or controller, the functions/operations specified in the flowchart and/or block diagram are implemented. The program codes can be executed entirely on a machine, partly executed on the machine, partly executed on the machine and partly executed on a remote machine as an independent software package, or entirely on the remote machine or server.

In the context of the present disclosure, a machine-readable medium may be a tangible medium that may contain or store programs for use by or in combination with an instruction execution system, apparatus or device. The machine-readable medium may be a machine-readable signal medium or a machine-readable storage medium. Machine-readable media may include, but are not limited to, electronic, magnetic, optical, electromagnetic, infrared, or semiconductor systems, apparatuses, or devices, or any suitable combination of the foregoing. More specific examples of machine-readable storage media may include one or more line based electrical connection, a portable computer disk, a hard disk, a random access memory (RAM), a read-only memory (ROM), an erasable programmable read-only memory (EPROM or flash memory), an optical fiber, a compact disk read-only memory (CD-ROM), an optical storage device, a magnetic storage device, or any suitable combination of the above.

In order to provide interaction with a user, the systems and technologies described herein may be implemented on a computer, where the computer has: a display apparatus (e.g., a CRT (cathode ray tube) or LCD (liquid crystal display) monitor) for displaying information to the user; and a keyboard and a pointing apparatus (e.g., a mouse or a trackball), through which the user can provide inputs to the computer. Other types of apparatuses may also be used to provide interaction with the user; for example, the feedback provided to the user may be any form of sensing feedback (for example, visual feedback, auditory feedback, or tactile feedback); and the input from the user may be received in any form (including acoustic input, speech input, tactile input).

The systems and technologies described here may be implemented in a computing system (e.g., a data server) including a back-end component, or in a computing system (e.g., an application server) including a middleware component, or in a computing system (e.g., a user computer having a graphical user interface or a web browser, through which the user can interact with the implementations of the systems and technologies described herein) including a front-end component, or in a computing system including any combination of the back-end component, the middleware component, or the front-end component. The components of the system may be interconnected via digital data communication (e.g., a communication network) in any form or medium. Examples of the communication network include: a local area network (LAN), a wide area network (WAN) and Internet.

A computer system may include a client and a server. The client and the server are generally located far away from each other and usually interact with each other through a communication network. A relationship between the client and the server is generated by computer programs running on corresponding computers and having a client-server relationship between each other. The server can be a cloud server, also known as a cloud computing server or a cloud host. It is a host product in a cloud computing business system, which solves shortcomings of traditional physical host and VPS services ("Virtual Private Server", or "VPS" for short) such as difficult management and weak business scalability. The server can also be a distributed system server or a server combined with blockchain.

It should be understood that steps can be reordered, added, or deleted by using the various forms of processes shown above. For example, the steps recited in the present application can be performed in parallel, in sequence or in different orders, as long as expected results of the technical solutions disclosed by the present application can be realized, and there is no limitation herein.

The above specific implementations do not limit the scope of protection of the present disclosure. It should be understood by those skilled in the art that various modifications, combinations, sub-combinations and substitutions may be made according to design requirements and other factors. Any modification, equivalent replacement and improvement made within the principle of the present disclosure shall be included in the scope of protection of the present disclosure.

**Claims**

1. An access processing method, comprising:

    determining (S401), according to an access requirement of a business system, functional modules required by the business system and a deployment number of each of the functional modules;
    allocating (S402), according to the deployment number of each of the functional modules, container components corresponding to the deployment number for each of the functional modules; and
    binding (S403) each of the functional modules with the corresponding container components.

2. The method according to claim 1, wherein the access requirement comprises at least one of the following: an overall request amount and a data amount of the business system,
    the determining (S401), according to an access requirement of a business system, functional modules required by the business system and a deployment number of each of the functional modules comprises:
    determining, according to the overall request amount and the data amount of the business system, the functional modules required by the business system and the deployment numbers of the functional modules.

3. The method according to claim 1 or 2, wherein the allocating (S402), according to the deployment number of each of the functional modules, container components corresponding to the deployment number for each of the functional modules comprises:

    determining, according to a target resource combination corresponding to the business system, container components in an idle state in the target resource combination; and
    allocating, according to the deployment number of each of the functional modules, the container components in the idle state in the target resource combination for each of the functional modules respectively.

4. The method according to claim 3, wherein before the allocating (S402), according to the deployment number of each of the functional modules, container components corresponding to the deployment number for each of the functional modules, the method further comprises:

    determining, according to the access requirement, configuration specifications of resource combinations corresponding to the access requirement; and
    allocating, according to the configuration specifications, the target resource combination for the business system, wherein the target resource combination is any resource combination of the resource combinations;
    optionally, wherein before the determining, according to the access requirement, configuration specifications of resource combinations corresponding to the access requirement, the method further comprises:
    configuring resource combinations of at least one configuration specification, each of the resource combinations comprises a plurality of container components, and total amounts of physical resources corresponding to the container components contained in the resource combinations of different configuration specifications are different.

5. The method according to any one of claims 1-4, wherein the binding (S403) each of the functional modules with the corresponding container components comprises:

storing binding information of the functional module and the corresponding container components; and
adding information of the functional module to deployment configuration information of the corresponding container components, wherein the deployment configuration information at least comprises information of the functional module deployed in the container components.

6. The method according to any one of claims 1-5, wherein after the binding (S403) each of the functional modules with the corresponding container components, the method further comprises:

in response to a business request, discovering and running at least one functional module according to a requested functional module, a link relationship between functional modules, and the binding information of the functional modules and the corresponding container components;
optionally, wherein the in response to a business request, discovering and running at least one functional module according to a requested functional module, a link relationship between functional modules, and the binding information of the functional modules and the corresponding container components comprises:

in response to the business request, determining at least one functional module to be run and a running sequence of the at least one functional module according to the requested functional module and the link relationship between functional modules;
determining, according to the binding information of the functional module and the corresponding container components, the container components corresponding to the functional module when any functional module needs to be run; and
calling the functional module according to address information of the container components corresponding to the functional module;

optionally, wherein the calling the functional module according to address information of the container components corresponding to the functional module comprises:

taking one container component in at least one container component as a target component according to running status information of the at least one container component corresponding to the functional module; and
calling the functional module deployed inside the target component according to address information of the target component.

7. The method according to any one of claims 1-6, further comprising:

acquiring the running status information of the container components in real time;
if it is determined that any one of the container components meets a replacement condition according to the running status information of the container components, migrating a functional module in the container component to another container component in an idle state; and
unbinding the functional module in the container component and the container component, and binding the functional module in the container component with the another container component.

8. The method according to claim 7, wherein the unbinding the functional module in the container component with the container component comprises:

deleting binding information of the functional module in the container component and the container component; and
deleting information of the functional module in deployment configuration information of the container component.

9. The method according to claim 7 or 8, wherein the replacement condition comprises at least one of the following: a device where a container component is located is disconnected, and an occupancy rate of physical resources corresponding to a container component is greater than or equal to a resource occupancy threshold.

10. The method according to any one of claims 1-9, wherein before the allocating (S402), according to the deployment number of each of the functional modules, container components corresponding to the deployment number for each of the functional modules, the method further comprises:
in response to a registration request of any one of the container components, generating and storing resource configuration information of the container component, wherein the resource configuration information comprises address information of the container component.

11. The method according to any one of claims 1-10, wherein before the allocating (S402), according to the deployment number of each of the functional modules, container components corresponding to the deployment number for each of the functional modules, the method further comprises:
creating a plurality of container components and allocating corresponding physical resources for each of the container components.

12. The method according to any one of claims 1-11, further comprising:
acquiring resource usage information and running status information of at least one container component according to a resource auditing requirement, and displaying the resource usage information and running status information of the at least one container component.

13. An access processing method, comprising:
in response to a binding of a container component and a functional module, loading and running the functional module by the container component to complete a deployment of the functional module.

14. The method according to claim 13, wherein the in response to a binding of a container component and a functional module, loading and running the functional module by the container component to complete a deployment of the functional module comprises:
loading and running a new functional module by the container component according to information of the functional module when the information of the new functional module is added to deployment configuration information of the container component, so as to complete the deployment of the functional module in the container component;
optionally, the method further comprises:
deleting a deployed functional module in the container component when information of the functional module in deployment configuration information of the container component is deleted.

15. The method according to claim 13 or 14, further comprising:

in response to an update instruction for a deployed functional module in the container component, deleting the deployed functional module by the container component, and loading and running the updated functional module;
optionally, wherein before the in response to a binding of a container component and a functional module, loading and running the functional module by the container component to complete a deployment of the functional module, the method further comprises:
sending a registration request to a resource control center when the container component is started for a first time, wherein the registration request comprises address information of the container component;
optionally, the method further comprises:
updating resource configuration information of the container component according to running status information of the container component, wherein the resource configuration information comprises the running status information of the container component.

FIG. 1

Resource control center | Container component

S201

A resource control center determines functional modules required by a business system and the deployment number of each of the functional modules according to an access requirement of the business system

S202

The resource control center allocates container components corresponding to the deployment number of each of the functional modules according to the deployment number of each of the functional modules

S204

In response to a binding of a container component and a functional module, loading and running the functional module by the container component to complete a deployment of the functional module

S203

The resource control center binds each of the functional modules with the corresponding container components

FIG. 2

Creating a plurality of container components and allocating corresponding physical resources for each of the container components     S301

The container component sends a registration request to a resource control center when the container component is started for a first time, where the registration request includes address information of the container component     S302

In response to a registration request of any one of the container components, the resource control center generates and stores resource configuration information of the container component, where the resource configuration information includes address information of the container component.     S303

FIG. 3

Resource control center | Container component

S401

Determining, according to an access requirement of a business system, functional modules required by the business system and the deployment number of each of the functional modules

S402

A resource control center allocates container components corresponding to the deployment number of each of the functional modules according to the deployment number of each of the functional modules

S403

Storing binding information of the functional module and the corresponding container components; and adding information of the functional module to deployment configuration information of the corresponding container components, where the deployment configuration information at least includes information of the functional module deployed in the container components

S404

Loading and running a new functional module by the container component according to information of the functional module when the information of the new functional module is added to deployment configuration information of the container component, so as to complete the deployment of the functional module in the container component

S405

In response to a business request, discovering and running at least one functional module according to a requested functional module, a link relationship between functional modules, and the binding information of the functional modules and the corresponding container components

FIG. 4

FIG. 5

FIG. 6

FIG. 7

Business deploying
module — 801

~ 80

Access processing device

FIG. 8

Running status updating
module — 904

Registering module — 903

~ 90

Functional module
destructing module — 902

Business deploying
module — 901

Access processing device

FIG. 9

1000

Computing
unit — 1001

ROM — 1002

RAM — 1003

—1004

—1005

I/O interface

Input unit — 1006

Output unit — 1007

Storage unit — 1008

Communicating
unit — 1009

FIG. 10